# FASCICULE DE BREVET EUROPEEN

(11) **EP 4 594 912 B1**
(45) Date de publication et mention de la délivrance du brevet: **08.07.2026**
(21) Numéro de dépôt: 23787164.5
(22) Date de dépôt: 25.09.2023
(51) Int. Cl.: G06F 9/451, G06F 21/71, G06F 21/85, G06Q 20/06, G06Q 20/32, G06Q 20/36

(54) **SMARTPHONE INTÉGRANT UN PORTEFEUILLE MATÉRIEL DE STOCKAGE DE CLÉS CRYPTOGRAPHIQUES METTANT EN OEUVRE UN MULTIPLEXAGE MATÉRIEL DE L'AFFICHEUR DU SMARTPHONE**
SMARTPHONE MIT HARDWARE-BÖRSE ZUR SPEICHERUNG VON KRYPTOGRAFISCHEN SCHLÜSSELN ZUR IMPLEMENTIERUNG VON HARDWARE-MULTIPLEXING DER ANZEIGE DES SMARTPHONES
SMARTPHONE INCORPORATING A HARDWARE WALLET FOR STORING CRYPTOGRAPHIC KEYS IMPLEMENTING HARDWARE MULTIPLEXING OF THE DISPLAY OF THE SMARTPHONE

(30) Priorité: 30.09.2022 FR 2209984; 30.09.2022 FR 2209987; 29.11.2022 FR 2212475; 17.05.2023 FR 2304933
(43) Date de publication de la demande: 06.08.2025
(73) Titulaire: LEDGER, 75003 Paris (FR)
(72) Inventeur: HAMEAU, Patrice, Emmanuel, Denis, 92340 Bourg-la-Reine (FR); THIERRY, Philippe, 91120 Palaiseau (FR); GUILLEMET, Charles, 38700 La Tronche (FR); KALUZA, Christian, 38210 Tullins (FR)
(74) Mandataire: Marchand, André
(86) Numéro de dépôt international: PCT/FR2023/051470
(87) Numéro de publication internationale: WO 2024/069087

(56) Documents cités:
- WO-A1-2015/124088
- US-A1- 2011 199 308
- US-A1- 2019 138 702
- US-A1- 2021 026 983
- US-B1- 6 662 020

## Description

### Domaine technique

L'invention est relative à des dispositifs portatifs sécurisés pour le stockage et la mise en œuvre de clés cryptographiques privées de façon cloisonnée par rapport à un réseau (stockage "à froid"), notamment des clés permettant d'effectuer des transactions sur une blockchain.

### Arrière-plan

Ces dernières années, le développement des cryptomonnaies ou autres types de cryptoactifs gérés par la blockchain, tels que les jetons non fongibles (« NFT ») et les contrats intelligents ("Smart Contracts"), a donné naissance à divers moyens de stockage et de conservation des clés privées attachées à ces différents types de cryptoactifs. C'est ainsi que sont apparues les notions de "portefeuille", de "stockage à froid" et de stockage "à chaud" de clés privées. Un "portefeuille", appelé aussi "porte-monnaie", est un appareil ou un programme dont la fonction est de gérer des cryptoactifs, et donc de stocker les clés privées qui y sont attachées. Les portefeuilles dits "chauds" ("hot wallets") sont connectés à Internet et susceptibles d'attaques de pirates ou d'exposition à des virus et malwares. Il peut s'agir de portefeuilles gérés par des plateformes d'échange centralisé, qui n'offrent pas le plus haut niveau de sécurité. Ainsi, de nombreuses plateformes centralisées ont été pillées de centaines de millions de dollars par des pirates au fil des ans. Les portefeuilles "chauds" peuvent aussi prendre la forme de programmes installés sur des téléphones mobiles, tablettes ou ordinateurs personnels ("software wallets"). De tels portefeuilles sont en permanence connectés à Internet et intègrent de nombreuses applications non sécurisées, donc eux-mêmes susceptibles d'attaques.

Les portefeuilles froids ("cold wallets") constituent la solution la plus sûre pour le stockage à froid ("cold storage") de clés privées, c'est-à-dire hors de tout accès direct à Internet, ce qui réduit la surface d'attaque et donc le risque de vol par piratage informatique. Les transactions mettant en jeu des clés privées sont signées dans un environnement hors ligne. Toute transaction initiée en ligne est temporairement transférée vers le portefeuille matériel hors ligne, où elle est ensuite signée numériquement avant d'être transmise au réseau en ligne. Comme la clé privée n'est pas communiquée au serveur en ligne pendant le processus de signature, un pirate informatique ne peut pas y accéder.

La forme la plus simple de stockage à froid est le stockage passif. Un portefeuille passif peut être un document papier ou un fichier image sur lequel sont inscrites des clés publiques et privées de l'utilisateur. Le stockage passif comporte généralement un code QR intégré qui peut ensuite être scanné pour signer une transaction. L'inconvénient de ce support est que si le stockage passif est perdu, illisible ou détruit, l'utilisateur ne peut plus accéder à ses fonds.

Les portefeuilles ou portes-monnaies matériels appelés "hardware wallets" constituent une alternative pratique aux portefeuilles passifs pour stocker des clés privées. De plus, ils sont généralement configurés pour générer des phrases de récupération ("recovery phrases") permettant de restaurer les clés privées s'ils sont perdus. Rappelons que les cryptoactifs ne sont jamais stockés dans un porte-monnaie matériel, mais se trouvent enregistrés sur la blockchain. Le porte-monnaie matériel ne fait que stocker les clés privées permettant de gérer les transactions sur la blockchain. Les clés publiques correspondant aux clés privées pointent vers une adresse sur la blockchain où se trouvent réellement les actifs.

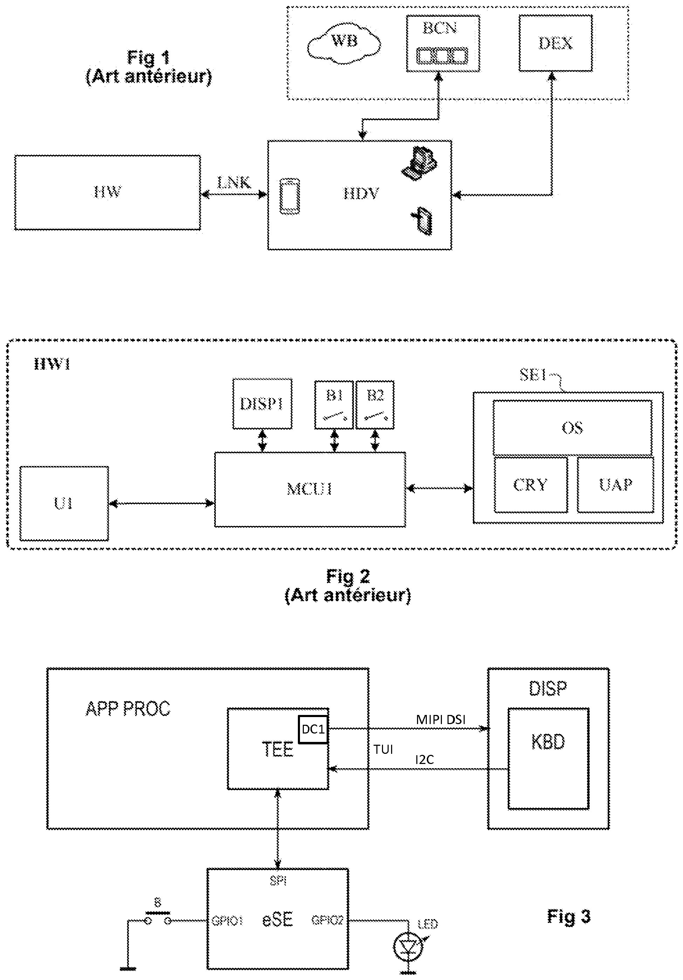

Comme montré sur la figure 1, un portefeuille matériel HW n'est jamais directement connecté à Internet. Pour être utilisable, le portefeuille matériel HW doit être relié à un dispositif hôte HDV au moyen d'une liaison de données LNK, par exemple USB ou Bluetooth. Le dispositif hôte HDV peut être un ordinateur, un téléphone mobile ou une tablette, et exécute un logiciel dit "compagnon" permettant de conduire des transactions sur la blockchain BCN, tel que le logiciel "Ledger Live" développé par la demanderesse. Alternativement, le portefeuille matériel HW peut être utilisé, par l'intermédiaire du dispositif hôte HDV avec des plateformes d'échange décentralisées ou "DEX", sur lesquelles l'utilisateur peut réaliser des transactions tout en conservant ses clés dans le portefeuille matériel.

Les portefeuilles matériels HW commercialisés par la demanderesse ont connu un important succès commercial en raison du haut degré de sécurité qu'ils offrent, grâce à l'utilisation d'un élément sécurisé ou "secure element" pour conserver les clés privées et signer les transactions. Un élément sécurisé est une plate-forme matérielle capable de stocker et de manipuler des données en conformité avec les règles et les exigences de sécurité fixées par une autorité de confiance. Il se présente sous la forme d'une puce de semi-conducteur mettant en œuvre diverses contre-mesures visant à contrer des attaques de fraudeurs.

La figure 2 montre l'architecture d'un portefeuille matériel HW1 du type commercialisé par la demanderesse sous l'appellation "Nano S", décrit plus en détail dans le document https://developers.ledger.com/docs/nano-app/bolos-hardware-architecture/. Le portefeuille matériel HW1 comporte un élément sécurisé SE1 associé à un microcontrôleur MCU1. Le processeur MCU1 comporte une interface USB U1 et agit comme un dispositif mandataire (proxy) à l'égard de l'élément sécurisé SE1, pour la communication avec un dispositif hôte externe HDV exécutant un logiciel compagnon (Cf. Fig. 1). L'élément sécurisé SE1 possède son propre système d'exploitation OS sécurisé (micrologiciel) lui permettant d'exécuter des programmes, et intègre un coprocesseur cryptographique CRY. Le portefeuille matériel HW1 comporte également un afficheur DISP1 et deux boutons B1, B2 gérés par le microcontrôleur MCU1. Ces deux boutons jouent un rôle important dans la sécurisation de certaines opérations : l'utilisateur doit appuyer en même temps sur les deux boutons afin de manifester son accord ou consentement pour la réalisation ou la finalisation de ces opérations.

Les portefeuilles matériels tels qu'exposés ci-dessus sont généralement des dispositifs portables détachés que l'on vient relier temporairement à un dispositif hôte "connecté", comme un terminal mobile ou smartphone, au moment d'effectuer une transaction. Le caractère détaché de ces portefeuilles matériels offre un degré supérieur de sécurité du fait qu'ils sont la plupart du temps inaccessibles via les réseaux publics, et donc peu exposés aux attaques. Cependant, cette caractéristique rend ces portefeuilles matériels peu ergonomiques et susceptibles d'égarement ou d'oubli.

On connaît des smartphones blockchain, qui sont conçus pour stocker de façon sécurisée certains actifs virtuels comme des cryptomonnaies et disposant d'un espace de stockage interne inaccessible par l'Internet pour constituer un portefeuille froid : le modèle Galaxy S10 de Samsung^{®}, le modèle Exodus 1 de HTC^{®}, ou le modèle Finney de Sirin Labs^{®}. Ces smartphones sont équipés d'un élément sécurisé embarqué (désigné par eSE pour "Embedded Secure Element") qui est une puce spécialement conçue pour stocker des données sensibles et les partager uniquement avec des applications et des personnes autorisées.

En matière de cryptomonnaie, il est requis un degré de sécurité très élevé. Les smartphones blockchain exposés ci-dessus offrent un certain degré de sécurité par l'utilisation d'une enclave sécurisée ou environnement d'exécution de confiance TEE ("Trusted Execution Environment"), mais la fonction de portefeuille matériel numérique, qui n'est pas la première fonction d'un tel téléphone, exige davantage. En effet, la mise en œuvre d'un portefeuille matériel à l'intérieur d'un smartphone supprime en partie les avantages en termes de sécurité d'un portefeuille matériel détaché que l'on connecte seulement en cas de besoin. Cela augmente inévitablement l'exposition du portefeuille aux attaques par Internet.

Il existe donc un besoin de prévoir un dispositif électronique portatif connecté à l'Internet permettant la réalisation d'une transaction sur la blockchain et notamment capable d'exécuter une application conçue pour réaliser des transactions sur la blockchain, telle que l'application Ledger Live ou équivalent, tout en offrant un degré de sécurité élevé en ce qui concerne la conservation des clés secrètes des comptes de cryptoactifs utilisées pour la signature des transactions.

Un tel dispositif électronique portatif connecté comprendra nécessairement un processeur d'application comprenant des moyens de connexion à l'Internet, capable d'exécuter l'application conçue pour réaliser des transactions sur la blockchain, par exemple Ledger Live, et comprenant un afficheur géré par le processeur d'application pour présenter à l'utilisateur des informations relatives à la transaction en cours de réalisation. Afin qu'un tel dispositif offre un degré de sécurité élevé, il peut être souhaité que des informations présentées à l'utilisateur pendant la réalisation d'une transaction ne puissent pas être falsifiées par un programme frauduleux ayant pris le contrôle du processeur d'application.

Le document WO2015124088A1 décrit un terminal mobile comprenant un système de transaction sécurisé équipé d'une unité d'affichage sécurisée et d'un bouton de confirmation physique, de sorte que lorsque le terminal mobile affiche des informations sensibles dans le processus de transaction électronique, les informations sensibles sont affichées séparément sur l'unité d'affichage sécurisée. Un bouton de confirmation physique séparé est utilisé comme unité d'un élément sécurisé, de sorte que les données de transaction clés peuvent être réalisées via l'élément sécurisé et son unité d'affichage sécurisée et son bouton de confirmation physique sans passer par le système d'exploitation général dans le terminal mobile.

Le document WO2015180581 enseigne un partage d'affichage entre une puce principale et une puce de sécurité au moyen d'un module de commutation piloté par un bouton (Fig. 3). Le module de commutation reçoit des données à afficher et les applique à un pilote d'affichage qui commande un écran d'affichage. Dans une telle architecture mixte dans laquelle plusieurs processeurs se partagent l'accès à un écran d'affichage, le pilote d'affichage agencé en sortie du module de commutation est susceptible de faire l'objet d'attaques visant le contrôle de l'affichage. De plus, en pratique chaque processeur doit pouvoir adresser au pilote d'affichage des signaux de contrôle, nécessitant la prévision de liaisons matérielles telles des pistes conductrices. De telles liaisons matérielles augmentent la surface d'attaque (appelée également surface d'exposition) de l'architecture mixte et notamment la surface d'attaque de la puce de sécurité.

Il existe donc également un besoin d'améliorer la sécurité des architectures mixte dans lesquelles plusieurs processeurs se partagent l'accès à un écran d'affichage.

Il existe également un besoin de pouvoir intégrer un portefeuille matériel dans une plateforme de terminal mobile classique pour la transformer en un terminal mobile avec portefeuille matériel embarqué, avec un minimum de modifications de la plateforme de terminal mobile.

Le document US 2011/0199308 A1 divulgue un terminal de point de vente (POS) comprenant deux circuits intégrés : un premier circuit intégré non sécurisé gérant les communications et le décodage vidéo, et un second circuit intégré sécurisé gérant les fonctions de sécurité incluant le stockage de clés de chiffrement, la gestion du clavier (keypad) et le contrôle de l'affichage. Le système opère selon deux modes mutuellement exclusifs : un mode pass-through où l'interface d'entrée clavier est désactivée permettant l'affichage de contenu non authentifié via un chemin de données traversant le circuit intégré sécurisé, et un mode sécurisé où l'interface clavier est activée pour la saisie d'informations sensibles (PIN) et où seules des images préalablement authentifiées par signature numérique peuvent être affichées. Cette architecture bimodale permet d'utiliser l'affichage à des fins commerciales tout en garantissant la sécurité lors des transactions financières.

Le document US 2019/0138702 A1 décrit un système sur puce (SOC) intégrant un élément sécurisé (SE), un premier élément de traitement (processeur d'application), et une interface bus pour connexion à un dispositif d'entrée/sortie (I/O). Le SE est configuré pour, dans un scénario sécurisé, accéder directement au dispositif I/O via l'interface bus afin d'obtenir et de traiter de manière sécurisée des données d'entrée utilisateur (par exemple un mot de passe) sans que ces données transitent par le premier élément de traitement. Dans un scénario commun ne nécessitant pas de sécurité renforcée, le SE contrôle l'accès du premier élément au dispositif I/O. Cette architecture permet d'atteindre un niveau de sécurité équivalent à celui d'un terminal dans un dispositif mobile de paiement, en empêchant l'interception des données sensibles par des applications malveillantes.

Le document US 2021/0026983 A1 divulgue un dispositif électronique comprenant une mémoire configurée pour stocker des informations de chiffrement, un processeur, et un commutateur sécurisé (secure switch) configuré pour déconnecter électriquement le processeur de la mémoire dans un premier état et pour les connecter électriquement dans un second état. Le processeur est configuré pour recevoir une entrée utilisateur permettant de basculer du premier au second état, puis pour fournir les informations de chiffrement stockées en mémoire à une application sécurisée s'exécutant dans un environnement d'exécution sécurisé via un système d'exploitation sécurisé. Le processeur génère ensuite un chemin électrique entre la mémoire et lui-même pour acquérir des informations de signature pour une transaction, et fournit ces informations de signature à une application de requête de signature. Le système peut intégrer des fonctionnalités blockchain et d'authentification biométrique.

Le document "Trusted User Interface API Version 1.0" publié par GlobalPlatform en juin 2013 (extrait de l'Internet : https://globalplatform.org/wp-content/uploads/2013/06/ GlobalPlatform_Trusted_User_Interface_API_v1.0.pdf) définit l'interface de programmation d'application qui permet d'implémenter des applications fiables s'exécutant au sein d'un environnement TEE.

### Résumé

L'invention est spécifiée par les revendications indépendantes annexées. En outre, des modes de réalisation préférés sont définis par les revendications dépendantes.

Des modes de réalisation concernent un terminal connecté comprenant un processeur d'application comportant un premier contrôleur d'affichage relié à un bus d'interface d'affichage véhiculant des données d'affichage formatées selon un protocole du bus d'interface d'affichage, et un afficheur relié au bus d'interface d'affichage et prévu pour recevoir des données d'affichage formatées selon ledit protocole. Le terminal comprend également un dispositif interposé sur le bus d'interface d'affichage, le dispositif comprenant un élément sécurisé relié au processeur d'application par un bus câblé sécurisé, un second contrôleur d'affichage commandé exclusivement par l'élément sécurisé, prévu pour fournir des données d'affichage formatées selon ledit protocole, et un multiplexeur commandé par l'élément sécurisé et comprenant une première entrée reliée à une sortie du premier contrôleur d'affichage via le bus d'interface d'affichage, une seconde entrée reliée à une sortie du second contrôleur d'affichage, et une sortie reliée à l'afficheur via le bus d'interface d'affichage, la sortie du multiplexeur fournissant à l'afficheur des données d'affichage formatées selon ledit protocole.

Selon un mode de réalisation, le dispositif interposé sur le bus d'interface d'affichage est de type système-en-boîtier ou système-sur-puce monté sur un support d'interconnexion du terminal.

Selon un mode de réalisation, le bus d'interface d'affichage est un bus MIPI-DSI.

Selon un mode de réalisation, l'élément sécurisé est configuré pour présenter un mode fonctionnement actif et un mode fonctionnement inactif, et pour, dans le mode inactif, connecter l'afficheur au contrôleur d'affichage du processeur d'application pour que l'afficheur soit géré par le processeur d'application, et dans le mode actif, connecter l'afficheur à la sortie du second contrôleur d'affichage pour que l'afficheur soit exclusivement géré par l'élément sécurisé, afficher des informations relatives à une transaction initiée par une application exécutée par le processeur d'application, puis effectuer des calculs cryptographiques nécessaires à la réalisation de la transaction, et le dispositif comprend en outre un dispositif de validation de transaction actionnable par un utilisateur et accessible exclusivement par l'élément sécurisé, permettant à l'utilisateur de valider la transaction en fonction des informations relatives à la transaction affichées par l'élément sécurisé, avant que l'élément sécurisé effectue les calculs cryptographiques.

Selon un mode de réalisation, le terminal comprend en outre un dispositif de saisie commandé par un bus correspondant, et un démultiplexeur commandé par l'élément sécurisé, l'élément sécurisé étant configuré pour dans le mode inactif, connecter le bus du dispositif de saisie au processeur d'application, et dans le mode actif, connecter le bus du dispositif de saisie à l'élément sécurisé.

Selon un mode de réalisation, le dispositif de saisie est une dalle tactile et le dispositif de validation de transaction est un bouton virtuel sur la dalle tactile dans le mode actif.

Selon un mode de réalisation, le dispositif de validation de transaction est un bouton physique.

Selon un mode de réalisation, l'élément sécurisé est configuré pour, pendant la réalisation d'étapes de la transaction qui lui sont dévolues, inhiber des circuits ou des organes du dispositif pouvant servir à un attaquant d'obtenir des informations sur des actions qu'effectue l'utilisateur ou des calculs qu'effectue l'élément sécurisé, tels qu'un accéléromètre, une centrale inertielle, une caméra, un capteur de courant, un capteur de tension, ou autre organe pouvant permettre à un attaquant de conduire une attaque par canal latéral.

Selon un mode de réalisation, le terminal comprend en outre un indicateur visuel dédié, commandé exclusivement par l'élément sécurisé et activé par l'élément sécurisé dans le mode actif et désactivé par l'élément sécurisé dans le mode inactif.

Selon un mode de réalisation, le terminal comprend en outre un commutateur physique bistable actionnable par l'utilisateur et accessible exclusivement par l'élément sécurisé, l'élément sécurisé étant configuré pour passer dans le mode actif lorsque le commutateur bistable est dans une première position et passer dans le mode inactif lorsque le commutateur bistable est dans une seconde position, et des moyens pour solliciter l'utilisateur à actionner le commutateur.

Des modes de réalisation concernant également un procédé pour réaliser une transaction au moyen d'un terminal tel que décrit ci-dessus, comprenant les étapes consistant à initialiser la transaction au moyen d'une application exécutée par processeur d'application ; le commutateur étant dans la position du mode inactif, solliciter, au moyen de l'application et d'un message sur l'afficheur, que l'utilisateur bascule le commutateur dans la position du mode actif ;au basculement du commutateur, envoyer à l'application, par l'élément sécurisé, un acquittement à l'application ; à la réception de l'acquittement, transmettre à l'élément sécurisé, par l'application, des informations sur la transaction ; au moyen de l'élément sécurisé, afficher les informations relatives à la transaction, attendre la validation de la transaction par l'utilisateur puis effectuer les calculs cryptographiques nécessaires à la réalisation de la transaction, puis envoyer un résultat desdits calculs à l'application ; et au moyen de l'élément sécurisé, solliciter à l'aide d'un message sur l'afficheur que l'utilisateur bascule le commutateur dans la position du mode inactif.

Des modes de réalisation concernant également un procédé pour intégrer un portefeuille matériel de cryptoactifs dans un terminal connecté comprenant un processeur d'application comportant un premier contrôleur d'affichage relié à un bus d'interface d'affichage véhiculant des données d'affichage formatées selon un protocole du bus d'interface d'affichage, et un afficheur relié au bus d'interface d'affichage et prévu pour recevoir des données d'affichage formatées selon ledit protocole. Le procédé comprend les étapes consistant à prévoir et à interposer sur le bus d'interface d'affichage un dispositif comprenant un élément sécurisé, un second contrôleur d'affichage commandé exclusivement par l'élément sécurisé, prévu pour fournir des données d'affichage formatées selon ledit protocole, et un multiplexeur commandé par l'élément sécurisé et comprenant une première entrée, une seconde entrée, et une sortie, relier l'élément sécurisé au processeur d'application par un bus câblé sécurisé, relier la première entrée du multiplexeur à une sortie du premier contrôleur d'affichage via le bus d'interface d'affichage, relier la seconde entrée multiplexeur à une sortie du second contrôleur d'affichage, et relier une sortie du multiplexeur à l'afficheur via le bus d'interface d'affichage, la sortie du multiplexeur fournissant à l'afficheur des données d'affichage formatées selon ledit protocole.

Selon un mode de réalisation, le dispositif interposé sur le bus d'interface d'affichage est de type système-en-boîtier ou système-sur-puce monté sur un support d'interconnexion du terminal.

Selon un mode de réalisation, le bus d'interface d'affichage est un bus MIPI-DSI.

Selon un mode de réalisation, le procédé comprend les étapes consistant à configurer l'élément sécurisé pour qu'il présent un mode fonctionnement actif et un mode fonctionnement inactif ; lorsque l'élément sécurisé est dans le mode inactif, connecter l'afficheur au contrôleur d'affichage du processeur d'application pour que l'afficheur soit géré par le processeur d'application ; lorsque l'élément sécurisé est dans le mode actif, connecter l'afficheur à la sortie du second contrôleur d'affichage pour que l'afficheur soit exclusivement géré par l'élément sécurisé ; et prévoir un dispositif de validation de transaction actionnable par un utilisateur et accessible exclusivement par l'élément sécurisé, permettant à l'utilisateur de valider la transaction en fonction des informations relatives à la transaction affichées par l'élément sécurisé, avant que l'élément sécurisé effectue les calculs cryptographiques.

Selon un mode de réalisation, le procédé comprend en outre les étapes consistant à prévoir un dispositif de saisie commandé par un bus correspondant, et un démultiplexeur commandé par l'élément sécurisé, et les étapes consistant à, lorsque l'élément sécurisé est dans le mode inactif, connecter le bus du dispositif de saisie au processeur d'application, et lorsque l'élément sécurisé est dans le mode actif, connecter le bus du dispositif de saisie à l'élément sécurisé.

Selon un mode de réalisation, le procédé comprend les étapes consistant à prévoir un commutateur physique bistable actionnable par l'utilisateur et accessible exclusivement par l'élément sécurisé, basculer l'élément sécurisé dans le mode actif lorsque le commutateur bistable est dans une première position, basculer l'élément sécurisé dans le mode inactif lorsque le commutateur bistable est dans une seconde position, et solliciter l'utilisateur à actionner le commutateur pour basculer l'élément sécurisé dans le mode actif ou dans le mode inactif.

### Description sommaire des dessins

Des modes de réalisation seront exposés dans la description suivante, faite à titre non limitatif en relation avec les figures jointes parmi lesquelles :
La figure 1 illustre des exemples classiques d'utilisation d'un portefeuille matériel par l'intermédiaire d'un dispositif hôte ;
La figure 2 illustre une architecture classique de portefeuille matériel ;
La figure 3 représente un schéma bloc partiel d'un premier mode de réalisation de terminal mobile ou autre dispositif connecté embarquant un portefeuille matériel ;
La figure 4 représente un schéma bloc d'un premier mode de réalisation de terminal connecté mettant en échec un premier type de fraude pouvant cibler un terminal du type de la figure 3 ;
La figure 5 représente un schéma bloc d'un deuxième mode de réalisation de terminal connecté mettant en échec le premier type de fraude pouvant cibler un terminal du type de la figure 3 ;
La figure 6 représente un schéma bloc d'un mode de réalisation de terminal connecté mettant en échec un deuxième type de fraude ciblant un terminal du type de la figure 5 ;
La figure 7 représente un schéma bloc d'un mode de réalisation de terminal connecté dans lequel l'utilisation d'un élément sécurisé embarqué est sous le contrôle de l'utilisateur ; et
La figure 8 illustre un agencement de composants d'un terminal mobile connecté selon l'une des figures 4 à 6.

### Description détaillée

Comme indiqué plus haut, on vise à intégrer un portefeuille matériel dans un terminal connecté (smartphone ou autre dispositif connecté) tout en évitant des attaques rendues possibles compte tenu de cette configuration. Pour ne pas créer un écosystème entièrement nouveau et ne pas nuire à l'expérience utilisateur, on cherche en outre une compatibilité avec du matériel et des systèmes d'exploitation existants (Android, iOS), et à utiliser les voies traditionnelles de distribution des applications. De tels terminaux mobiles peuvent donc installer et exécuter des applications pouvant provenir de sources inconnues, voire douteuses, ce qui augmente le défi de la sécurisation des transactions avec le portefeuille matériel embarqué.

On part donc du principe que les applications installables peuvent gagner un accès à des ressources matérielles intervenant lors d'une communication avec un élément sécurisé mettant en œuvre le portefeuille matériel.

En général, les applications officielles des services concernés, notamment des services financiers (banques, cryptomonnaies), sont certifiées et signées et sont plus compliquées à modifier par du code malveillant. Lorsqu'elles sont chargées pour exécution, la vérification de signature échoue si elles ont été modifiées. Par contre, un logiciel malveillant peut déduire certaines interactions de l'application officielle avec le matériel et modifier les entrées et sorties de l'application officielle.

Par exemple, il est possible que le logiciel malveillant enregistre des touches appuyées pour voler un code secret, simule des touches appuyées pour fausser une transaction, modifie l'affichage pour tromper l'utilisateur sur la transaction qu'il est en train d'effectuer.

Plus spécifiquement, la validation d'une transaction sur un téléphone par un clavier virtuel peut être interceptée par un logiciel espion de bas niveau ayant accès à l'interface de l'écran tactile en relevant les coordonnées des appuis sur la dalle tactile. Sans savoir ce qui est affiché, le logiciel espion peut se baser sur l'hypothèse que le clavier virtuel affiché est l'un des nombreux claviers traditionnels disponibles sur la plateforme, de sorte que les coordonnées des appuis révèlent les touches du clavier. Le logiciel espion peut également avoir accès aux accéléromètres ou autres capteurs habituellement présents dans un terminal mobile - les appuis sur différentes positions de la dalle se traduisent par des valeurs d'accélération différentes en rotation sur deux axes, de sorte que les positions des appuis peuvent être déduites.

Pour y remédier partiellement, les applications affichent, pour la saisie des codes d'identification personnels, un clavier virtuel numérique avec des touches aléatoirement positionnées. Cependant, bien que cette mesure soit utile pour entraver la déduction d'un code d'identification, cela n'empêche pas un logiciel malveillant de déduire qu'une transaction est en cours et, avant que l'utilisateur n'ait terminé, modifier le montant ou le destinataire et simuler la validation (modifications des entrées de l'application sans modifier l'application elle-même).

La figure 3 représente un schéma bloc partiel d'un premier mode de réalisation de terminal mobile ou autre dispositif connecté embarquant un portefeuille matériel.

Le terminal mobile intègre un processeur d'application APP PROC relié à divers dispositif périphériques, notamment un écran tactile incluant un afficheur DISP et une dalle tactile KBD. Le processeur gère l'afficheur par l'intermédiaire d'un bus d'interface d'affichage dédié, souvent un bus MIPI DSI. Le processeur gère la dalle tactile par une autre interface, généralement I2C. Pour des raisons de clarté, tous les éléments d'un terminal mobile ne sont pas représentés.

Lorsque le terminal mobile est conçu pour effectuer des transactions sécurisées, comme la plupart des terminaux mobiles aujourd'hui, le processeur d'application intègre généralement une enclave sécurisée ou un environnement d'exécution de confiance TEE ("Trusted Execution Environment"). Une telle enclave comprend généralement un processeur, une mémoire et un gestionnaire d'affichage ou contrôleur d'affichage DC1 (« Display Control ») pour la gestion d'un d'écran tactile. Elle est conçue pour mettre en œuvre une interface utilisateur de confiance TUI ("Trusted User Interface"), par exemple comme le préconise le document "Trusted User Interface API" de GlobalPlatform^{®} (Cf. références en Annexe). Ainsi, cette enclave peut, selon les instructions exécutées par l'application, gérer l'affichage DISP et la saisie sur la dalle tactile KBD, comme cela est représenté.

Une telle enclave est distincte d'un élément sécurisé habituellement utilisé dans les portefeuilles matériels, et ne procure pas à elle seule un degré de sécurité suffisant pour les transactions de cryptoactifs gérés par la blockchain. En effet, les portefeuilles matériels pouvant donner accès à des valeurs très élevées en cryptoactifs, les moyens mis en œuvre par les pirates sont à la hauteur des sommes qu'ils peuvent extorquer.

Selon les modes de réalisation décrits ici, le terminal mobile inclut en outre un élément sécurisé embarqué eSE mettant en œuvre un portefeuille matériel. L'élément eSE peut être semblable à celui intégré dans les portefeuilles matériels détachés, dits aussi portefeuilles matériels froids, exposés précédemment. Il peut s'agir du microcontrôleur ST33 de STMicroelectronics^{®} qui possède, entre autres, une interface SPI sécurisée ("Serial Peripheral Interface"), deux interfaces I2C et diverses broches d'entrée/sortie programmables GPIO. Le lien désigné par LNK à la figure 1 entre le terminal mobile HDV et le portefeuille matériel détaché HW, généralement une interface USB ou Bluetooth, est ici réalisé par une liaison câblée permanente entre l'élément sécurisé eSE et le processeur d'application via l'interface SPI. Pour assurer une meilleure sécurité de la communication, la liaison peut être gérée par l'enclave TEE, comme cela est représenté.

La réalisation de la fonction de portefeuille matériel dans l'élément eSE et les échanges entre l'élément eSE et le processeur d'application peuvent être en tout point similaires à ce qui est connu de la figure 1, en considérant par analogie que l'élément sécurisé forme ici le portefeuille matériel détaché HW de la figure 1 et que le processeur d'application forme ici le dispositif hôte HDV de la figure 1.

Par ailleurs, une des broches d'entrée/sortie GPIO1 est reliée à un bouton physique B prévu pour valider des transactions par une opération mécanique. La broche GPIO1 est exclusivement gérée par l'élément sécurisé et son changement d'état est impossible à simuler par du logiciel exécuté sur le processeur d'application. Une autre broche d'entrée/sortie GPIO2 commande un indicateur LED pour signaler qu'une opération sécurisée est en cours avec le portefeuille matériel dans l'élément eSE. Le bouton B est un bouton physique dédié agencé, par exemple, sur une paroi latérale du terminal mobile, qui se distingue visuellement des autres boutons habituellement prévus sur le terminal mobile. L'indicateur LED est également dédié et ostensible par rapport aux autres indicateurs lumineux habituellement prévus sur le terminal mobile.

Avec cette configuration, une transaction est préparée de façon usuelle par une application officielle, comme "Ledger Live", exécutée sur le processeur d'application. A partir du moment où l'utilisateur doit valider la transaction, l'application passe par l'enclave TEE pour afficher la transaction sur l'afficheur DISP et, le cas échéant, gérer une phase de saisie sur la dalle tactile KBD, comme la saisie d'un code d'identification pour déverrouiller l'élément sécurisé. La validation et la signature de la transaction sont déléguées à l'élément sécurisé eSE (le portefeuille matériel) par des commandes émises sur le bus SPI par l'intermédiaire de l'enclave TEE. Le cas échéant, la saisie du code de déverrouillage est transmise à l'élément sécurisé par le bus SPI. L'élément sécurisé eSE réagit à ces commandes par l'activation de l'indicateur LED et l'attente d'un appui sur le bouton B.

Lorsque le bouton B est appuyé, l'élément sécurisé eSE calcule la signature de la transaction avec les clés privées stockées dans le portefeuille et transmet la signature à l'application par le bus SPI. L'élément sécurisé, ayant réalisé sa tâche, désactive l'indicateur LED et attend de nouvelles commandes. L'application met à jour la blockchain à travers un service réseau, affiche les informations utiles, et attend une nouvelle interaction avec l'utilisateur.

Si aucune action n'est détectée sur le bouton après l'écoulement d'un délai, la transaction est annulée. L'élément sécurisé le signale à l'application par le bus SPI, désactive l'indicateur LED, et attend de nouvelles commandes.

Le bouton B a une fonction similaire à celle des boutons B1, B2 d'un portefeuille matériel détaché du type de la figure 2. Un logiciel malveillant, s'il parvient à modifier le montant ou l'adresse de la transaction, ne pourra pas simuler une validation, qui nécessite l'actionnement d'un bouton physique détectable seulement par l'élément sécurisé eSE. Ainsi, l'utilisateur, avant de valider, pourra confirmer que la transaction telle qu'affichée est bien celle qu'il a initiée. Si la transaction a été modifiée, l'utilisateur peut en principe le constater sur l'affichage et annuler la transaction. L'annulation pourra être effectuée classiquement par un appui sur un bouton virtuel sur l'écran tactile. La fonction du bouton d'annulation ne peut pas être détournée en une fonction de validation, puisqu'une validation n'est possible qu'à l'aide du bouton physique B géré exclusivement par l'élément sécurisé eSE.

L'indicateur LED rassure l'utilisateur sur le fait que l'élément sécurisé est en train de prendre en charge les opérations et que, en principe, les demandes qui lui sont faites sont de source sûre.

Selon une variante un peu plus coûteuse en termes de fabrication du boîtier du terminal mobile, on pourra prévoir deux boutons physiques sur lesquels il faut appuyer simultanément pour valider une transaction, comme on le fait avec les portefeuilles matériels détachés.

Maintenant, un logiciel malveillant plus sophistiqué, comme on l'a précédemment indiqué, pourrait modifier les données d'entrée et/ou de sortie de l'application pour les détourner. Par exemple, le logiciel malveillant pourrait intercepter des données de transaction saisies dans l'application pour les remplacer (comme le montant et l'adresse). Même si cela est difficile lorsque la saisie est faite en mode sécurisé à l'aide de l'enclave TEE, ce n'est pas impossible compte tenu du degré de sécurité offert par une enclave TEE classique. L'application générerait alors une transaction avec des données falsifiées qu'elle communiquerait à l'élément sécurisé eSE. Pour que l'utilisateur ne puisse pas se rendre compte de la falsification en observant les données de transaction affichées, l'affichage pourrait lui-même être contrôlé par le logiciel malveillant, même si cela est difficile, pour que les données affichées correspondent à la transaction initialement souhaitée par l'utilisateur. Ainsi, l'utilisateur verrait des données de transaction apparemment correctes et validerait la transaction, mais cette validation opérerait sur la transaction frauduleusement modifiée qui a été déléguée sournoisement à l'élément sécurisé eSE.

Dans un portefeuille matériel détaché classique, ce type de fraude est déjoué par le fait que le portefeuille dispose de son propre afficheur et présente à l'utilisateur les caractéristiques essentielles de la transaction sur cet afficheur : l'utilisateur se fie aux informations affichées par le portefeuille matériel détaché, et peut les comparer à celles affichées par l'application sur le terminal. Une telle fonctionnalité n'est pas envisageable lorsque le portefeuille matériel est embarqué dans un terminal connecté de type smartphone ou équivalent, compte tenu de la difficulté de prévoir un deuxième écran et le surcoût que cela impliquerait.

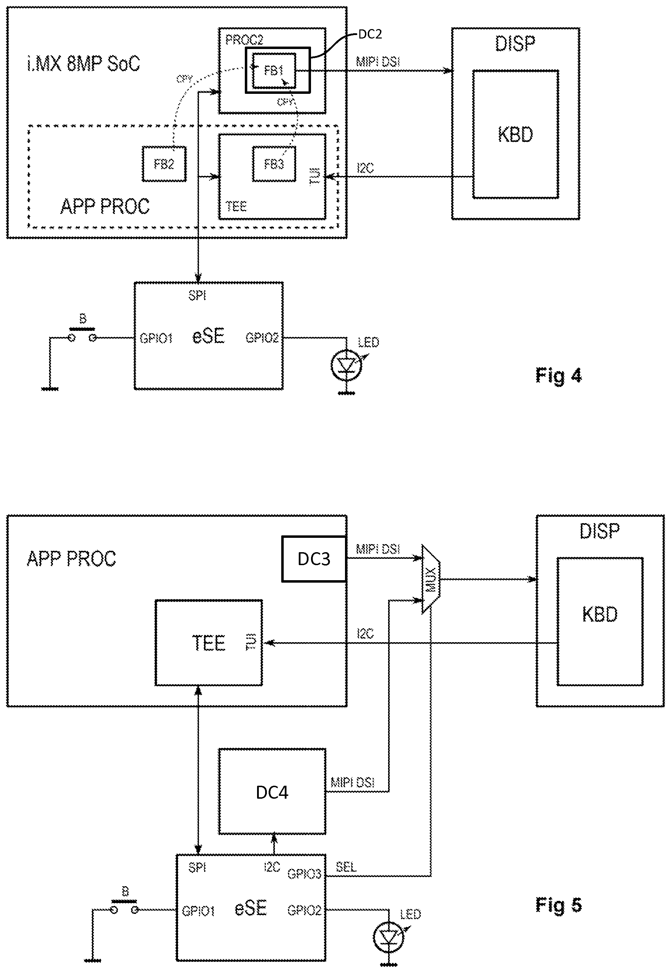

La figure 4 est un schéma bloc d'un premier mode de réalisation de terminal mobile intégrant un portefeuille matériel et mettant en échec ce type de manipulation de l'affichage.

Par rapport à la figure 3, le processeur d'application APP PROC est associé à un processeur secondaire PROC2. Le processeur PROC2 dispose de son propre contrôleur d'affichage DC2. Dans un mode de réalisation, le processeur d'application APP PROC possède comme précédemment une enclave TEE et le processeur PROC2 possède un jeu de commandes lui permettant de commander l'enclave TEE via un bus SPI. Dans un mode de réalisation, le processeur d'application APP PROC et le processeur PROC2 peuvent être intégrés dans un système-sur-puce SoC, par exemple le circuit i.MX 8M Plus de la société NXP^{®}.

Le contrôleur d'affichage DC2 du processeur PROC2 commande le bus MIPI DSI de l'afficheur DISP au moyen d'une mémoire de trame FB1 que le processeur PROC2 peut remplir à partir du contenu d'une mémoire de trame FB2 du processeur d'application, du contenu d'une mémoire de trame FB3 de l'enclave TEE (flèches CPY) si une telle enclave est prévue, ou encore à partir de données d'affichage reçues par un autre canal ou générées en interne, selon les besoins.

Dans un autre mode de réalisation, le processeur PROC2 peut afficher directement des données de la mémoire FB2 ou FB3 à partir d'un pointeur qui lui a été fourni. Les mécanismes d'affichage sont documentés et ne seront pas décrits plus en détail. De façon générale, quel que soit le mode de réalisation retenue, il est prévu que le processeur PROC2 soit le maître du bus MIPI DSI en ce sens qu'il peut décider quelles sont les données qu'il fournit à l'afficheur, en fonction de leur origine.

Ainsi, selon les besoins d'une application en cours d'exécution, l'afficheur DISP reçoit des données à afficher du processeur d'application, de l'enclave TEE, ou du processeur secondaire PROC2 lui-même. Le contrôleur d'affichage DC2 étant contrôlé par le processeur PROC2, le processeur PROC2 peut choisir les informations qui seront transmises à l'afficheur DISP afin d'afficher des informations qu'il juge prioritaires en fonction de sa configuration..

Dans ce mode de réalisation, l'élément sécurisé eSE est relié par le bus SPI au processeur PROC2, dans l'objectif de gérer l'affichage selon les modalités exposées ci-après, et processeur PROC2 est configuré logiciellement pour donner la priorité aux commandes d'affichage émises par l'élément sécurisé.

Par ailleurs, dalle tactile KBD est toujours être gérée par l'enclave TEE pour effectuer une saisie sécurisée, mais d'autres modes de contrôle de celle-ci seront décrits par la suite, applicables à ce mode de réalisation

Avec cette configuration, une transaction est préparée de façon usuelle par une application officielle, comme "Ledger Live", exécutée par le processeur d'application APP PROC. L'application délègue le traitement des étapes sensibles de la transaction à l'élément sécurisé, par le bus SPI, par exemple des étapes au cours desquelles l'utilisateur doit valider la transaction et où la transaction doit être signée au moyen d'une clé privée d'un compte de cryptoactif détenue par l'élément sécurisé. L'application peut également utiliser l'enclave TEE, si celle-ci est prévue, par exemple si une saisie d'un code de déverrouillage est requise.

En ce qui concerne l'affichage d'informations relatives à la transaction pour leur validation par l'utilisateur, les données d'affichage produites par l'application peuvent, comme à la figure 3, être transmises au contrôleur d'affichage DC2 via la mémoire de trame FB3 de l'enclave TEE ou la mémoire de trame FB2 du processeur d'application, qui sont alors remplies avec les données graphiques correspondantes et dont le contenu est ensuite transféré dans la mémoire de trame FB1 du contrôleur d'affichage DC2.

Parallèlement, l'élément sécurisé eSE, ayant lui-même reçu les données de la transaction, transmet par le bus SPI des données d'affichage au processeur PROC2 pour qu'il les affiche via son contrôleur d'affichage FB1 à la place des données qui seraient présentes dans les mémoires de trame FB2 et FB3.

Si d'aventure les données d'affichage de la transaction produites par l'application sont compromises par un logiciel malveillant, ces données se retrouvent dans la mémoire de trame FB2 ou FB3, mais elles sont ignorées, car ce sont les données produites par l'élément sécurisé dans la mémoire de trame FB1 qui sont effectivement affichées.

Dans un tel mode de réalisation, le processeur PROC2 joue ainsi le rôle d'une sorte de multiplexeur logiciel, du fait qu'il est configuré logiciellement pour donner la priorité aux données d'affichage fournies par l'élément sécurisé. Pour cette raison, le processeur PROC2 est de préférence configuré matériellement et/ou logiciellement de manière à offrir un degré de sécurité élevé. Matériellement, le processeur PROC2 est de préférence « cloisonné » par rapport aux autres circuits avec lesquels ils communiquent, de façon semblable à un élément sécurisé, afin de réduire sa surface d'attaque. Notamment, le nombre de liaisons matérielles entre le processeur PROC2 et les autres circuits, par exemple les liaisons avec le processeur d'application APP PROC et l'enclave TEE, peut être réduit au minimum pour empêcher qu'une attaque de ces éléments puisse permettre de prendre le contrôle du processeur PROC2. Schématiquement, ce minimum de liaison matérielles peut consister dans le fait que les liaisons entre le processeur APP PROC et le processeur PROC2 sont réduites à celles qui permettent au processeur APP PROC de transférer au processeur PROC2 le contenu de la mémoire de trame FB2. De même, les liaisons matérielles entre l'enclave TEE et le processeur PROC2 peuvent être réduites au seul bus SPI, par l'intermédiaire duquel le contenu de la mémoire de trame FB3 est transférée dans la mémoire de trame FB1. Le processeur PROC2 peut également exécuter un logiciel protégé contre diverses attaques connues.

Les figures 5, 6 et 7 montrent d'autres modes de réalisation d'un terminal mobile intégrant un portefeuille matériel, mettant également en échec une manipulation de l'affichage par un logiciel malveillant, et offrant une solution compatible avec une multitude de chipsets disponibles pour les smartphones. Dans ces modes de réalisation, les données d'affichage véhiculées par le bus d'interface d'affichage relié à l'afficheur DISP, ici et comme précédemment un bus MIPI DSI, sont contrôlées par l'élément sécurisé eSE. Ainsi, ce dernier peut décider d'injecter sur le bus MIPI DSI des données d'affichage qui lui sont propres en empêchant celles fournies par le processeur d'application de parvenir à l'afficheur. Une telle « injection » de données d'affichage par l'élément sécurisé est faite au moyen d'un aiguillage sous la forme d'un multiplexeur MUX commandé par l'élément sécurisé eSE. Le multiplexeur MUX reçoit sur une première entrée les données d'affichage fournies par le processeur d'application APP PROC et sur une seconde entrée des données d'affichage fournies par l'élément sécurisé eSE. La sortie du multiplexeur est directement reliée à l'afficheur auquel elle fournit les données d'affichage au format MPI DSI, qui sont soit celles fournies par le processeur d'application, soit celle fournies par l'élément sécurisé.

Une telle architecture basée sur le contrôle de l'afficheur par l'élément sécurisé, au moyen d'un multiplexage matériel du bus de bas niveau, ici MIPI DSI, véhiculant des données d'affichage dans un format directement exploitable par l'afficheur, permet de réduire au maximum la surface d'attaque de l'ensemble des composants du terminal connecté.

En particulier, sont évités les problèmes de sécurité qui découleraient du fait de placer, à la sortie du multiplexeur, un contrôleur d'affichage qui convertirait en données MIPI DSI des données non formatées (ou formatées selon un autre protocole) fournies par le multiplexeur. Un tel contrôleur d'affichage serait susceptible d'attaques, notamment d'attaques logicielles, visant à corrompre les données qu'il fournit à l'afficheur. Un tel contrôleur d'affichage pourrait également, s'il était relié au processeur d'application et à l'élément sécurisé par un bus de contrôle commun (par exemple un bus véhiculant des signaux de synchronisation), offrir une surface d'attaque importante à des fraudeurs par l'intermédiaire de ce bus de contrôle.

Ainsi, la solution proposée ici, qui consiste en une commutation des signaux d'affichage de bas niveau (c'est-à-dire ne nécessitant pas d'être transformés avant d'être fournis à l'afficheur) permet d'éviter ce type d'attaque.

Dans le mode de réalisation de la figure 5, le bus MIPI DSI de l'afficheur DISP est donc relié à la sortie du multiplexeur MUX. Le multiplexeur reçoit sur une première entrée les données d'affichage au format MIPI DSI produites par le contrôleur d'affichage DC3 du processeur d'application APP PROC, formatées selon le protocole MIPI DSI. Alternativement, ces données pourraient être fournies par un contrôleur d'affichage de l'enclave TEE, qui n'a pas été représenté. Mais en pratique ces données d'affichage n'ont plus besoin d'être gérées par l'enclave TEE, comme cela est représenté. En effet une deuxième entrée du multiplexeur reçoit des données d'affichage au format MIPI DSI générées par un contrôleur d'affichage DC4 géré exclusivement par l'élément sécurisé eSE, permettant de sécuriser l'affichage d'informations sensibles. Une borne d'entrée/sortie GPIO3 de l'élément sécurisé eSE est programmée pour fournir au multiplexeur un signal SEL de sélection de la première ou deuxième entrée du multiplexeur. Le signal SEL pourrait aussi être prélevé sur la borne GPIO2 qui commande l'indicateur LED.

Le contrôleur d'affichage DC4 reçoit des commandes d'affichage de l'élément sécurisé eSE, par exemple par le bus I2C. Le bus I2C offre un débit de données relativement bas, mais ce bus est utilisé pour véhiculer seulement des commandes d'affichage textuelles et vectorielles, utilisant une faible bande passante. L'élément sécurisé eSE est ainsi programmé pour générer des commandes d'affichage basiques pour les transactions qu'il traite et les transmettre au contrôleur d'affichage.

Le contrôleur d'affichage DC4 est ici un circuit séparé, car les puces des éléments sécurisés couramment disponibles n'en sont pas dotés ou n'ont pas suffisamment de bande passante pour générer les images matricielles attendues sur le bus d'un afficheur tel que celui d'un smartphone moderne.

Dans l'attente d'une demande de signature transaction, l'élément sécurisé eSE commande le multiplexeur MUX pour envoyer à l'afficheur DISP les données d'affichage au format MIPI DSI provenant du processeur d'application.

Lorsqu'une application exécutée par le processeur APP PROC délègue une signature de transaction à l'élément sécurisé eSE, celui-ci envoie les commandes d'affichage des données de la transaction au contrôleur d'affichage DC4 et commute le multiplexeur MUX pour que les données au format MIPI DSI produites par le contrôleur d'affichage DC4 parviennent à l'afficheur DISP. L'indicateur LED est activé et l'élément sécurisé eSE attend la validation par le bouton B.

Avec cette configuration, l'afficheur DISP présente les données de transaction effectivement reçues par l'élément sécurisé eSE. Si elles ont été modifiées par rapport au souhait initial, l'utilisateur le verra et pourra annuler la transaction.

Il est bien entendu préférable que d'éventuelles saisies de codes de déverrouillage ou autres informations sensibles servant à la gestion de l'élément sécurisé eSE présentent un degré de sécurité au moins de même niveau que l'affichage.

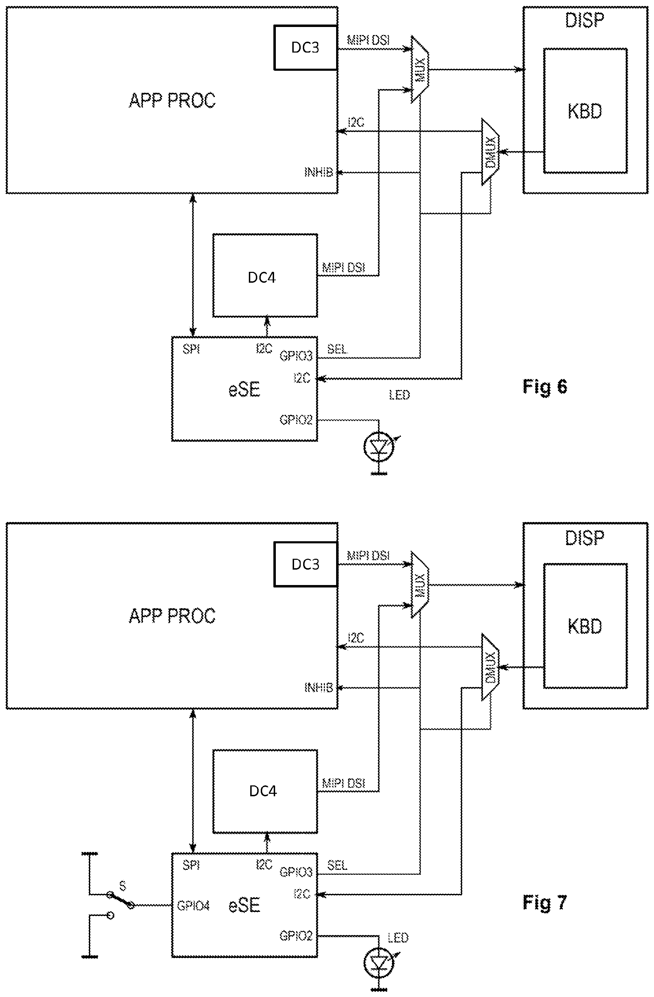

La figure 6 est un schéma bloc d'un mode de réalisation de terminal mobile utilisant l'élément sécurisé eSE à la place d'une enclave TEE pour gérer la dalle tactile KBD, et réhaussant le degré de sécurité au niveau de celui d'un élément sécurisé. Par rapport à la figure 5, le bus I2C de sortie de la dalle tactile KBD est relié à un aiguillage sous la forme d'un démultiplexeur DMUX dont une première sortie est reliée au processeur d'application APP PROC et une deuxième sortie est reliée à l'interface I2C de l'élément sécurisé eSE. La sélection du démultiplexeur DMUX peut être opérée par le même signal SEL que le multiplexeur MUX. Dans cette structure, le bouton de validation physique B est optionnel, comme on le comprendra ci-après. De plus, l'enclave TEE n'est plus requise et elle n'est plus représentée.

Dans l'attente du traitement d'une transaction, l'élément sécurisé eSE positionne le multiplexeur MUX et le démultiplexeur DMUX pour relier l'afficheur DISP et la dalle tactile KBD au processeur d'application, dans une configuration traditionnelle.

Puisque le clavier tactile échappe au contrôle de l'application lors de la délégation à l'élément sécurisé, l'application ne peut plus mettre en œuvre la phase de saisie. Ainsi, la phase de saisie est aussi déléguée à l'élément sécurisé, qui est pour l'occasion programmé pour gérer un clavier virtuel quant à la saisie et l'affichage.

Quand une transaction est déléguée par l'application à l'élément sécurisé par le bus SPI, sans passer cette fois par l'enclave TEE, l'élément sécurisé eSE bascule le multiplexeur et le démultiplexeur pour relier l'afficheur DISP et la dalle tactile KBD respectivement au contrôleur d'affichage DC4 et à l'élément sécurisé eSE. L'élément sécurisé eSE met en œuvre la phase de saisie, si une saisie est requise (fourniture d'un code de déverrouillage). La saisie sur la dalle tactile ne peut plus être interceptée ou modifiée par un logiciel s'exécutant sur le processeur d'application, tandis que toute tentative de modification de l'affichage par un logiciel s'exécutant sur le processeur d'application est ignorée.

Compte tenu de cette configuration, un logiciel s'exécutant sur le processeur d'application ne peut pas simuler des fausses validations sur le clavier tactile, de sorte que le bouton physique B est optionnel ; par ailleurs la validation peut aussi être faite en toute sécurité à l'aide de la dalle tactile.

La sécurisation de la dalle tactile KBD a été décrite en partant de la structure de la figure 5, mais elle est applicable à la structure de la figure 4 où en mode sécurisé, la gestion de la dalle tactile est commutée sur l'élément sécurisé à la place de l'enclave TEE.

Selon un mode de réalisation, le signal SEL, ou tout autre indicateur du mode sécurisé (comme le signal de commande de l'indicateur LED), est utilisé pour inhiber des circuits ou des organes en principe inutilisés pendant le mode sécurisé, et pouvant servir à un attaquant d'obtenir des informations sur des actions qu'effectue l'utilisateur ou des calculs qu'effectue l'élément sécurisé, tels qu'un accéléromètre, une centrale inertielle, une caméra, un capteur de courant, un capteur de tension, ou autre organe pouvant permettre à un attaquant de conduire une attaque par canal latéral, ou le processeur d'application lui-même.

Le signal SEL est relié, par exemple, à une borne INHIB servant à arrêter le processeur d'application. Un arrêt peut être réalisé en activant une entrée de réinitialisation du processeur, en coupant son signal d'horloge, ou en coupant son alimentation. Dans ce cas, tout logiciel malveillant s'exécutant sur le processeur d'application effectuant des analyses pour déduire des clés cryptographiques ou autres informations sensibles est rendu inopérant pendant la transaction sécurisée.

L'inactivation totale du processeur d'application est possible dans une configuration, par exemple celle de la figure 6, où toutes les fonctions devant rester actives pendant la transaction sont déportées sur l'élément sécurisé eSE.

S'il n'est pas possible ou souhaité de désactiver le processeur d'application, on peut utiliser le signal SEL pour désactiver des organes ou des circuits annexes pouvant servir à la déduction d'informations sensibles pouvant permettre une attaque par canal latéral. Par exemple les informations fournies par des accéléromètres permettent de déduire les positions des appuis sur la dalle tactile. Les accéléromètres sont généralement intégrés dans un circuit dédié de centrale inertielle ou IMU ("Inertial Measurement Unit"). Une telle centrale inertielle peut être désactivée et arrêtant son horloge, en coupant son alimentation ou en coupant son lien de communication avec le processeur d'application, généralement un bus I2C.

Un logiciel malveillant peut être conçu pour initier des transactions alors que l'élément sécurisé est dans une configuration où il ne demande pas de code de déverrouillage, par exemple pendant une durée limitée après avoir effectué une transaction précédente. Le logiciel malveillant tente de modifier l'affichage, mais cette tentative échoue du fait que c'est l'élément sécurisé eSE qui est maître de l'affichage dans les figures 5 et 6. Ainsi, l'affichage reflète la transaction effectivement initiée par le logiciel malveillant, tandis que l'élément sécurisé eSE attend la validation de l'utilisateur sur la dalle tactile (dans la configuration de la figure 6), ou sur le bouton physique B (dans la configuration de la figure 4 ou 5). Dans le cas de la figure 3, la modification frauduleuse de l'affichage est possible, de sorte que l'utilisateur peut être trompé quant à la nature de la transaction.

Si la transaction frauduleuse est initiée à un moment où l'utilisateur a son terminal mobile en vue, il voit, sans l'avoir sollicité, passer le terminal mobile en mode sécurisé (indicateur LED), afficher la transaction et demander sa validation. L'utilisateur pourra vérifier l'affichage et annuler la transaction, mais cela demande à l'utilisateur d'être attentif et ne pas valider la transaction par mégarde.

Si l'utilisateur n'a pas le terminal mobile en vue, la transaction est en principe annulée automatiquement à l'expiration d'un délai d'attente. Toutefois, si le terminal mobile est soumis à des secousses dans une poche ou un sac, une validation intempestive pourrait survenir avant l'expiration du délai d'attente, soit par un appui sur le bouton physique B (figures 3 à 5), soit par un appui sur la dalle tactile (figure 6) qui pourrait être configuré pour être opérant sur l'écran de veille du terminal mobile au moment de demander une validation.

La figure 7 est un schéma bloc d'un mode de réalisation de terminal mobile mettant en échec ce type de fraude. On vise ici à simuler en quelque sorte le fonctionnement d'attachement et détachement au dispositif hôte d'un portefeuille détaché classique, à savoir le fait d'établir ou de rompre la connexion entre le portefeuille détaché et son dispositif hôte, par exemple une connexion Bluetooth ou USB. En plus des éléments de la figure 6, un commutateur bistable S physique est connecté pour relier une broche d'entrée/sortie GPIO4 de l'élément sécurisé eSE à un niveau logique bas dans une première position, et à un niveau logique haut dans une deuxième position. Le commutateur S est agencé, par exemple, sur l'une des parois latérales du terminal mobile.

L'élément sécurisé eSE est programmé pour être muet aux commandes reçues par le bus SPI (mode inactif) dans l'une des positions du commutateur S, par exemple dans la première position, et accepter des transactions par le bus SPI (mode actif ou sécurisé) dans l'autre position. Le terminal est conçu pour que le commutateur S soit le seul moyen disponible pour commuter le mode de l'élément sécurisé, c'est-à-dire qu'une application ne peut plus à elle seule déléguer le traitement d'une transaction.

Ainsi, le mode de l'élément sécurisé est exclusivement sous le contrôle de l'utilisateur qui choisit le mode à l'aide du commutateur S selon les besoins.

Le commutateur S étant initialement dans la position du mode inactif, une application susceptible d'initier des transactions est alors conçue pour solliciter l'utilisateur à changer de mode lorsqu'elle s'apprête à déléguer le traitement de la transaction à l'élément sécurisé eSE. Elle peut envoyer à l'afficheur DISP un message du type "Veuillez placer le téléphone en mode sécurisé à l'aide du commutateur", de préférence avec les informations relatives à la transaction en cours. Ce message est analogue à un message invitant l'utilisateur à connecter son portefeuille détaché classique au terminal mobile.

L'utilisateur bascule alors le commutateur pour passer en mode actif. L'élément sécurisé eSE réagit en prenant diverses mesures protectrices, comme basculer le signal SEL pour relier l'afficheur DISP au contrôleur d'affichage DC4 et relier la dalle tactile KBD à l'élément sécurisé eSE. L'indicateur LED est aussi activé pour signaler à l'utilisateur que le terminal mobile est en mode sécurisé. L'élément sécurisé eSE envoie un acquittement à l'application qui reprend l'exécution en transmettant les informations de la transaction à l'élément sécurisé. L'élément sécurisé eSE opère la phase de saisie sur la dalle tactile KBD, le cas échéant, et demande la validation à l'utilisateur en affichant de nouveau les informations relatives à la transaction.

Lorsque la transaction est validée et signée, l'élément sécurisé eSE communique la transaction signée à l'application qui l'inscrit sur la blockchain. L'élément sécurisé sollicite l'utilisateur à changer de mode, en envoyant à l'afficheur DISP un message du type "Veuillez quitter le mode sécurisé en basculant le commutateur". Ce message est analogue à celui indiquant que l'utilisateur peut retirer son portefeuille détaché classique. Lorsque le commutateur est basculé, les connexions initiales de l'afficheur et de la dalle tactile sont rétablies, et l'indicateur LED est désactivé.

Le commutateur S peut aussi être mis en œuvre dans les structures des figures 4 et 5, où la dalle tactile KBD n'est pas reliée à l'élément sécurisé. Dans ce cas, c'est l'application qui opère la phase de saisie avant de solliciter le basculement du commutateur S.

Bien entendu, le commutateur S, à la merci de l'utilisateur, pourrait être basculé à des moments où ce n'est pas requis, ou ne pas être basculé quand c'est requis. Différentes combinaisons ne sont ainsi pas "normales", et cela peut être signalé à l'utilisateur par des messages affichés ou des alarmes, incitant l'utilisateur à basculer le commutateur pour que les opérations puissent reprendre normalement.

Un logiciel malveillant pourrait également se comporter comme une application officielle en demandant le basculement de mode. Toutefois, comme l'utilisateur n'a pas initié la transaction et qu'on lui demande une action relativement contraignante, il est susceptible d'être plus vigilant. Le logiciel malveillant ne peut plus afficher un message trompeur hors propos dans ce contexte, puisque l'utilisateur s'attend à voir des informations de transaction. De telles informations de transaction seront difficiles à rendre crédibles, d'autant plus si elles sont vraies - typiquement un transfert d'un montant élevé à une adresse inconnue. Si le logiciel malveillant tente de cacher la nature de la transaction, celle-ci sera révélée et différente au moment où elle est affichée pour validation par l'élément sécurisé eSE, si l'utilisateur a quand même été incité à basculer en mode sécurisé.

En tout cas, une transaction en attente, qu'elle soit frauduleuse ou non, ne peut plus être validée par un appui intempestif sur un bouton physique ou virtuel, car l'utilisateur doit intentionnellement basculer le terminal mobile en mode sécurisé pour valider la transaction.

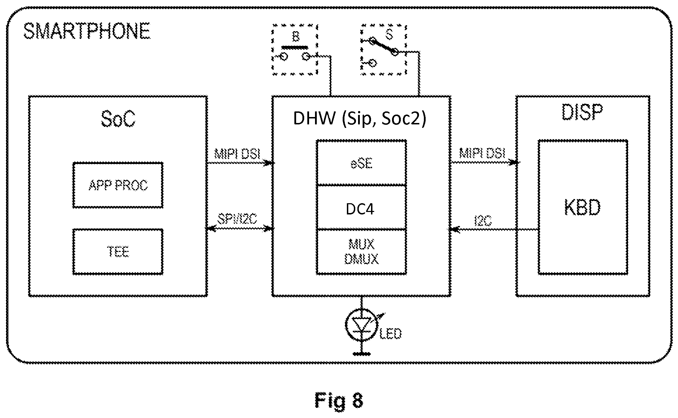

La figure 8 illustre un agencement de composants d'un terminal mobile (smartphone) selon l'une des figures 4 à 7. Il s'agit ici de pouvoir « greffer » une fonctionnalité de portefeuille matériel dans une plateforme de terminal mobile classique pour le transformer en un terminal mobile avec portefeuille matériel embarqué.

Dans le terminal mobile classique, le processeur d'application APP PROC et éventuellement son enclave TEE peuvent être réalisés sous la forme d'un système-sur-puce SoC ("System-on-Chip"). Le SoC comporte des broches soudées à des pistes respectives d'un circuit imprimé ou autre support d'interconnexion recevant un certain nombre d'autres composants. Des groupes respectifs de broches sont associés aux différents liens de communication entre les composants, notamment les bus MIPI DSI, SPI et I2C précédemment mentionnés.

Par ailleurs, l'afficheur DISP et la dalle tactile KBD sont généralement déportés et parallèles au circuit imprimé. Leurs différents bus de commande sont alors reliés au circuit imprimé par des connecteurs soudés sur des pistes du circuit imprimé.

Les différents éléments exposés ci-dessus pour mettre en œuvre un portefeuille matériel embarqué, choisis parmi les éléments eSE, DC4, MUX, DMUX, et des connecteurs pour tout ou partie des éléments B, S et LED selon le mode de réalisation retenu, sont réalisé sous la forme d'un dispositif DHW intégré dans la plateforme de terminal mobile classique. Le dispositif DHW peut être du type système-en-boîtier SiP (« System-in-Package ») conçu pour être monté sur un circuit imprimé, ou former un autre SoC (SoC2).

Pour adapter le dispositif DHW à la plateforme de terminal mobile classique et obtenir ainsi l'intégration d'un portefeuille matériel embarqué, on aménage une place sur le circuit imprimé pour souder le dispositif DHW, celui-ci étant par exemple sous forme de SiP, on redessine les pistes des différents bus utilisés en les interrompant pour qu'elles passent par le dispositif DHW, et on amène des pistes pour établir le bus SPI entre le processeur APP PROC et l'élément sécurisé eSE.

Les différents éléments physiques discrets gérés par les circuits du SiP (le bouton B, le commutateur S, l'indicateur LED) peuvent être fixés sur le boîtier du terminal et reliés à des connecteurs du SiP, ou à des connecteurs déportés sur le circuit imprimé, eux-mêmes reliés par des pistes à des broches dédiées du SiP.

Il sera noté qu'une telle intégration du dispositif DHW dans un terminal mobile classique est considérablement simplifiée par le fait que le multiplexeur MUX est interposé directement sur le bus MIPI DSI reliant le processeur d'application APP PROC à l'afficher DISP, ce qui permet d'intercepter le flux non sécurisé des données d'image fourni par le processeur d'application pour lui substituer par le flux sécurisé des données d'image fourni par le contrôleur d'affichage DC4 de l'élément sécurisé eSE. Ainsi, aucun décodage inverse des données d'image au format MIPI DSI n'est nécessaire, pas plus que la prévision d'un contrôleur d'affichage en sortie du multiplexeur MUX pour fournir des données d'image au format MIPI DSI.

Avec cette configuration, un terminal mobile classique peut être transformé en un terminal mobile avec portefeuille matériel embarqué par le simple ajout du dispositif DHW en boîtier SiP ou sous la forme d'un SoC, sur un circuit imprimé portant les composants du terminal classique. Bien que la conception du circuit imprimé adapté représente un certain coût de développement et de production, ce coût reste négligeable du fait qu'il n'y a pas d'adaptation à faire au niveau de la plateforme matérielle du terminal classique.

Il sera noté que MPI DSI est actuellement le bus d'interface d'affichage standardisé le plus généralement utilisé entre un contrôleur d'affichage d'un terminal mobile et un périphérique d'affichage. Il apparaîtra clairement à l'homme de l'art que les idées et principes qui viennent d'être décrits en relation avec l'intégration d'un portefeuille matériel dans un terminal mobile peuvent être appliqués si un autre type de bus d'interface d'affichage que MIPI DSI, le cas échéant.

Il apparaîtra également clairement à l'homme de l'art que les modes de réalisation qui viennent d'être décrits sont susceptibles de diverses variantes en fonction de l'évolution des technologies. Notamment, bien que l'élément sécurisé ait été décrit dans ce qui précède comme étant équipé d'un contrôleur d'affichage DC4 distinct auquel il est relié par un bus I2C, il n'est pas exclu qu'un élément sécurisé puisse à l'avenir intégrer un tel contrôleur d'affichage DC4.

La description qui précède a été effectuée essentiellement dans le contexte des smartphones embarquant un portefeuille matériel pour signer des transactions sur la blockchain ("smartphones blockchain"). Les principes décrits s'appliquent toutefois à tout type de terminal connecté (à Internet ou à un réseau local) stockant des secrets servant à diverses utilisations impliquant des calculs cryptographiques, comme la signature de transactions en général et l'authentification, y compris l'authentification "zero knowledge". Dans d'autres types de terminaux connectés, l'interface homme-machine peut être un afficheur associé à un clavier physique, ou à un joystick.

## Revendications

1. Terminal connecté comprenant :
un processeur d'application (APP PROC) comportant un premier contrôleur d'affichage (DC3) relié à un bus d'interface d'affichage (MIPI DSI) véhiculant des données d'affichage formatées selon un protocole du bus d'interface d'affichage, et
un afficheur (DISP) relié au bus d'interface d'affichage (MIPI DSI) et prévu pour recevoir des données d'affichage formatées selon ledit protocole ;
**caractérisé en ce qu'**il comprend un dispositif (DHW) interposé sur le bus d'interface d'affichage (MIPI DSI), le dispositif comprenant :
un élément sécurisé (eSE) relié au processeur d'application par un bus câblé sécurisé (SPI),
un second contrôleur d'affichage (DC4) commandé exclusivement par l'élément sécurisé, prévu pour fournir des données d'affichage formatées selon ledit protocole, et
un multiplexeur (MUX) commandé par l'élément sécurisé et comprenant une première entrée reliée à une sortie du premier contrôleur d'affichage (DC3) via le bus d'interface d'affichage (MIPI DSI), une seconde entrée reliée à une sortie du second contrôleur d'affichage (DC4), et une sortie reliée à l'afficheur (DISP) via le bus d'interface d'affichage (MIPI DSI), la sortie du multiplexeur fournissant à l'afficheur des données d'affichage formatées selon ledit protocole,
le terminal étant configuré pour, dans le cadre de la réalisation d'une transaction initiée par une application exécutée par le processeur d'application et pendant la réalisation d'étapes de la transaction dévolues à l'élément sécurisé :
- arrêter le processeur d'application afin qu'il soit totalement inactif, ou
- inhiber (INHIB) des circuits ou des organes du dispositif pouvant servir à un attaquant d'obtenir des informations sur des actions qu'effectue l'utilisateur ou des calculs qu'effectue l'élément sécurisé, tels qu'un accéléromètre, une centrale inertielle, une caméra, un capteur de courant, un capteur de tension, ou autre organe pouvant permettre à un attaquant de conduire une attaque par canal latéral, ladite inhibition pouvant inclure l'arrêt du processeur d'application.

2. Terminal selon la revendication 1, dans lequel le dispositif (DHW) interposé sur le bus d'interface d'affichage (MIPI DSI) est de type système-en-boîtier (SIP) ou système-sur-puce (SoC) monté sur un support d'interconnexion du terminal.

3. Terminal selon l'une des revendications 1 et 2, dans lequel le bus d'interface d'affichage est un bus MIPI-DSI.

4. Terminal selon l'une des revendications 1 à 3 dans lequel l'élément sécurisé est configuré pour présenter un mode fonctionnement actif et un mode fonctionnement inactif, et pour :
dans le mode inactif, connecter l'afficheur au contrôleur d'affichage (DC3) du processeur d'application (APP PROC) pour que l'afficheur soit géré par le processeur d'application, et
dans le mode actif, connecter l'afficheur à la sortie du second contrôleur d'affichage (DC4) pour que l'afficheur soit exclusivement géré par l'élément sécurisé, afficher des informations relatives à une transaction initiée par une application exécutée par le processeur d'application, puis effectuer des calculs cryptographiques nécessaires à la réalisation de la transaction,
le dispositif (DHW) comprenant en outre un dispositif de validation de transaction (B) actionnable par un utilisateur et accessible exclusivement par l'élément sécurisé (eSE), permettant à l'utilisateur de valider la transaction en fonction des informations relatives à la transaction affichées par l'élément sécurisé, avant que l'élément sécurisé effectue les calculs cryptographiques.

5. Terminal selon la revendication 4, comprenant en outre :
- un dispositif de saisie (KBD) commandé par un bus correspondant (I2C), et
- un démultiplexeur (DMUX) commandé par l'élément sécurisé (eSE),
l'élément sécurisé étant configuré pour :
dans le mode inactif, connecter le bus du dispositif de saisie au processeur d'application, et
dans le mode actif, connecter le bus du dispositif de saisie à l'élément sécurisé.

6. Terminal selon la revendication 5, dans lequel le dispositif de saisie (KBD) est une dalle tactile et le dispositif de validation de transaction est un bouton virtuel sur la dalle tactile dans le mode actif.

7. Terminal selon l'une des revendications 4 à 6, dans lequel le dispositif de validation de transaction est un bouton physique (B).

8. Terminal selon l'une des revendications 4 à 7, comprenant en outre un indicateur visuel dédié (LED), commandé exclusivement par l'élément sécurisé et activé par l'élément sécurisé dans le mode actif et désactivé par l'élément sécurisé dans le mode inactif.

9. Terminal selon l'une des revendications 4 à 8, comprenant en outre :
un commutateur physique bistable (S) actionnable par l'utilisateur et accessible exclusivement par l'élément sécurisé (eSE), l'élément sécurisé étant configuré pour passer dans le mode actif lorsque le commutateur bistable est dans une première position et passer dans le mode inactif lorsque le commutateur bistable est dans une seconde position, et
des moyens (DISP) pour solliciter l'utilisateur à actionner le commutateur.

10. Procédé pour réaliser une transaction au moyen d'un terminal selon la revendication 9, comprenant les étapes consistant à :
initialiser la transaction au moyen d'une application exécutée par processeur d'application (APP PROC),
le commutateur (S) étant dans la position du mode inactif, solliciter, au moyen de l'application et d'un message sur l'afficheur (DISP), que l'utilisateur bascule le commutateur dans la position du mode actif ;
au basculement du commutateur, envoyer à l'application, par l'élément sécurisé, un acquittement à l'application ;
à la réception de l'acquittement, transmettre à l'élément sécurisé, par l'application, des informations sur la transaction ;
au moyen de l'élément sécurisé, afficher les informations relatives à la transaction, attendre la validation de la transaction par l'utilisateur puis effectuer les calculs cryptographiques nécessaires à la réalisation de la transaction, puis envoyer un résultat desdits calculs à l'application ; et
au moyen de l'élément sécurisé, solliciter à l'aide d'un message sur l'afficheur (DISP) que l'utilisateur bascule le commutateur dans la position du mode inactif.

## Patentansprüche

1. Verbundenes Endgerät, umfassend:
einen Anwendungsprozessor (APP PROC), umfassend eine erste Anzeigesteuerung (DC3), die mit einem Anzeigeschnittstellenbus (MIPI DSI) verbunden ist, der Anzeigedaten überträgt, die gemäß einem Protokoll des Anzeigeschnittstellenbusses formatiert sind, und
ein Anzeigegerät (DISP), das mit dem Anzeigeschnittstellenbus (MIPI DSI) verbunden und vorgesehen ist, um gemäß dem Protokoll formatierte Anzeigedaten zu empfangen;
**dadurch gekennzeichnet, dass** es eine Vorrichtung (DHW) umfasst, die auf dem Anzeigeschnittstellenbus (MIPI DSI) zwischengeschaltet ist, wobei die Vorrichtung umfasst:
ein Secure Element (eSE), das durch einen sicheren drahtgebundenen Bus (SPI) mit dem Anwendungsprozessor verbunden ist,
eine zweite Anzeigesteuerung (DC4), die ausschließlich durch das Secure Element gesteuert wird und vorgesehen ist, um gemäß dem Protokoll formatierte Anzeigedaten bereitzustellen, und
einen durch das Secure Element gesteuerten Multiplexer (MUX), umfassend einen ersten Eingang, der über den Anzeigeschnittstellenbus (MIPI DSI) mit einem Ausgang der ersten Anzeigesteuerung (DC3) verbunden ist, einen zweiten Eingang, der mit einem Ausgang der zweiten Anzeigesteuerung (DC4) verbunden ist, und einen Ausgang, der über den Anzeigeschnittstellenbus (MIPI DSI) mit dem Anzeigegerät (DISP) verbunden ist, wobei der Ausgang des Multiplexers dem Anzeigegerät Anzeigedaten bereitstellt, die gemäß dem Protokoll formatiert sind,
wobei das Endgerät konfiguriert ist, um im Rahmen der Durchführung einer Transaktion, die durch eine vom Anwendungsprozessor ausgeführte Anwendung initiiert wird, und während der Durchführung von Schritten der Transaktion, die dem Secure Element zugewiesen sind:
- den Anwendungsprozessor anzuhalten, damit er vollständig inaktiv ist, oder
- Schaltungen oder Elemente der Vorrichtung zu sperren (INHIB), die einem Angreifer dazu dienen können, Informationen über Handlungen, die der Benutzer ausführt, oder Berechnungen, die das Secure Element ausführt, zu erhalten, wie einen Beschleunigungsmesser, eine inertiale Messeinheit, eine Kamera, einen Stromsensor, einen Spannungssensor oder ein anderes Element, das es einem Angreifer ermöglichen kann, einen Seitenkanalangriff durchzuführen, wobei die Sperrung das Anhalten des Anwendungsprozessors einschließen kann.

2. Endgerät nach Anspruch 1, wobei die auf dem Anzeigeschnittstellenbus (MIPI DSI) zwischengeschaltete Vorrichtung (DHW) vom Typ System-in-Package (SIP) oder System-on-a-Chip (SoC) ist, die auf einem Verbindungsträger des Endgeräts angebracht ist.

3. Endgerät nach einem der Ansprüche 1 und 2, wobei der Anzeigeschnittstellenbus ein MIPI-DSI-Bus ist.

4. Endgerät nach einem der Ansprüche 1 bis 3, wobei das Secure Element konfiguriert ist, um einen aktiven Betriebsmodus und einen inaktiven Betriebsmodus aufzuweisen, und zum:
Verbinden, in dem inaktiven Modus, des Anzeigegeräts mit der Anzeigesteuerung (DC3) des Anwendungsprozessors (APP PROC), damit das Anzeigegerät durch den Anwendungsprozessor verwaltet wird, und
Verbinden, in dem aktiven Modus, des Anzeigegeräts mit dem Ausgang der zweiten Anzeigesteuerung (DC4), damit das Anzeigegerät ausschließlich durch das Secure Element verwaltet wird, Anzeigen von Informationen in Bezug auf eine Transaktion, die durch eine von dem Anwendungsprozessor ausgeführte Anwendung initiiert wird, und anschließendes Durchführen von kryptografischen Berechnungen, die für die Durchführung der Transaktion erforderlich sind,
wobei die Vorrichtung (DHW) ferner eine Transaktionsvalidierungsvorrichtung (B) umfasst, die durch einen Benutzer betätigbar und ausschließlich durch das Secure Element (eSE) zugänglich ist, wodurch es dem Benutzer ermöglicht wird, die Transaktion in Abhängigkeit von den durch das Secure Element angezeigten Informationen in Bezug auf die Transaktion zu validieren, bevor das Secure Element die kryptographischen Berechnungen durchführt.

5. Endgerät nach Anspruch 4, ferner umfassend:
- eine Eingabevorrichtung (KBD), die durch einen entsprechenden Bus (I2C) gesteuert wird, und
- einen durch das Secure Element (eSE) gesteuerten Demultiplexer (DMUX),
wobei das Secure Element konfiguriert ist zum:
Verbinden, in dem inaktiven Modus, des Busses der Eingabevorrichtung mit dem Anwendungsprozessor, und
Verbinden, in dem aktiven Modus, des Busses der Eingabevorrichtung mit dem Secure Element.

6. Endgerät nach Anspruch 5, wobei die Eingabevorrichtung (KBD) ein Touchpanel ist und die Transaktionsvalidierungsvorrichtung in dem aktiven Modus eine virtuelle Taste auf dem Touchpanel ist.

7. Endgerät nach einem der Ansprüche 4 bis 6, wobei die Transaktionsvalidierungsvorrichtung eine physische Taste (B) ist.

8. Endgerät nach einem der Ansprüche 4 bis 7, ferner umfassend eine dedizierte optische Anzeige (LED), die ausschließlich durch das Secure Element gesteuert wird und durch das Secure Element in dem aktiven Modus aktiviert wird und durch das Secure Element in dem inaktiven Modus deaktiviert wird.

9. Endgerät nach einem der Ansprüche 4 bis 8, ferner umfassend:
einen physikalischen bistabilen Schalter (S), der durch den Benutzer betätigbar und ausschließlich durch das Secure Element (eSE) zugänglich ist, wobei das Secure Element konfiguriert ist, um in den aktiven Modus zu wechseln, wenn sich der bistabile Schalter in einer ersten Position befindet, und in den inaktiven Modus zu wechseln, wenn sich der bistabile Schalter in einer zweiten Position befindet, und
Mittel (DISP) zum Auffordern des Benutzers, den Schalter zu betätigen.

10. Verfahren zum Durchführen einer Transaktion mittels eines Endgeräts nach Anspruch 9, umfassend die Schritte bestehend aus:
Initialisieren der Transaktion mittels einer durch einen Anwendungsprozessor (APP PROC) ausgeführten Anwendung,
wenn sich der Schalter (S) in der Position des inaktiven Modus befindet, Auffordern des Benutzers mittels der Anwendung und einer Nachricht auf dem Anzeigegerät (DISP), den Schalter in die Position des aktiven Modus umzuschalten;
beim Umschalten des Schalters, Senden einer Bestätigung, durch das Secure Element, an die Anwendung;
beim Empfang der Bestätigung, Übertragen von Informationen über die Transaktion durch die Anwendung an das Secure Element;
mittels des Secure Element, Anzeigen der Informationen in Bezug auf die Transaktion, Warten auf die Validierung der Transaktion durch den Benutzer, dann Durchführen der für die Durchführung der Transaktion erforderlichen kryptografischen Berechnungen, dann Senden eines Ergebnisses der Berechnungen an die Anwendung; und
mittels des Secure Element, Auffordern des Benutzers mithilfe einer Nachricht auf dem Anzeigegerät (DISP), den Schalter in die Position des inaktiven Modus umzuschalten.

## Claims

1. A connected terminal comprising:
an application processor (APP PROC) having a first display controller (DC3) connected to a display interface bus (MIPI DSI) conveying display data formatted according to a protocol of the display interface bus, and
a display (DISP) connected to the display interface bus (MIPI DSI) and designed to receive display data formatted according to said protocol;
**characterized in that** it comprises a device (DHW) interposed on the display interface bus (MIPI DSI), the device comprising:
a secure element (eSE) connected to the application processor by a secure wired bus (SPI),
a second display controller (DC4) exclusively controlled by the secure element, designed to provide display data formatted according to said protocol, and
a multiplexer (MUX) controlled by the secure element and comprising a first input connected to an output of the first display controller (DC3) via the display interface bus (MIPI DSI), a second input connected to an output of the second display controller (DC4), and an output connected to the display (DISP) via the display interface bus (MIPI DSI), the multiplexer output providing display data formatted according to said protocol to the display,
the terminal being configured to, in the context of performing a transaction initiated by an application executed by the application processor and during execution of steps of the transaction assigned to the secure element:
- halt the application processor so that it is totally inactive, or
- inhibit (INHIB) circuits or components of the device that could serve an attacker to obtain information about actions performed by the user or calculations performed by the secure element, such as an accelerometer, an inertial measurement unit, a camera, a current sensor, a voltage sensor, or other component that could allow an attacker to conduct a side-channel attack, said inhibition being able to halt the application processor.

2. The terminal according to claim 1, wherein the device (DHW) interposed on the display interface bus (MIPI DSI) is a system-in-package (SIP) or system-on-chip mounted on an interconnection support of the terminal.

3. The terminal according to claims 1 and 2, wherein the display interface bus is a MIPI-DSI bus.

4. The terminal according to one of claims 1 to 3 wherein the secure element is configured to present an active operating mode and an inactive operating mode, and to:
in the inactive mode, connect the display to the display controller (DC3) of the application processor (APP PROC) so that the display is managed by the application processor, and
in the active mode, connect the display to the output of the second display controller (DC4) so that the display is exclusively managed by the secure element, display information relating to a transaction initiated by an application executed by the application processor, then perform cryptographic calculations necessary for completing the transaction,
the device (DHW) further comprising a transaction validation device (B) actionable by a user and exclusively accessible by the secure element (eSE), allowing the user to validate the transaction based on information related to the transaction displayed by the secure element, before the secure element performs the cryptographic calculations.

5. The terminal according to claim 4, further comprising:
- a user input device (KBD) controlled by a corresponding bus (I2C), and
- a demultiplexer (DMUX) controlled by the secure element (eSE),
the secure element being configured to:
in the inactive mode, connect the user input device bus to the application processor, and
in the active mode, connect the user input device bus to the secure element.

6. The terminal according to claim 5, wherein the user input device (KBD) is a touchpad and the transaction validation device is a virtual button on the touchpad in the active mode.

7. The terminal according to one of claims 4 to 6, wherein the transaction validation device is a physical button (B).

8. The terminal according to one of claims 4 to 7, further comprising a dedicated visual indicator (LED), exclusively controlled by the secure element and activated by the secure element in the active mode and deactivated by the secure element in the inactive mode.

9. The terminal according to one of claims 4 to 8, further comprising:
a physical bistable switch (S) actionable by the user and exclusively accessible by the secure element (eSE), the secure element being configured to enter the active mode when the bistable switch is in a first position and enter the inactive mode when the bistable switch is in a second position, and
means (DISP) for prompting the user to actuate the switch.

10. A method for executing a transaction using a terminal according to claim 9, comprising the steps of:
initializing the transaction using an application executed by the application processor (APP PROC),
with the switch (S) being in the inactive mode position, prompting the user, using the application and a message on the display (DISP), to toggle the switch to the active mode position;
upon toggling the switch, sending to the application, by the secure element, an acknowledgment to the application;
upon reception of the acknowledgment, transmitting to the secure element, by the application, information about the transaction;
using the secure element, displaying the information related to the transaction, waiting for validation of the transaction by the user, then performing the cryptographic calculations necessary for completing the transaction, then sending a result of said calculations to the application; and
using the secure element, prompting the user via a message on the display (DISP) to toggle the switch to the inactive mode position.
